(19) Europäisches Patentamt
European Patent Office
Office européen des brevets

(11) **EP 2 186 178 B1**

(12) **EUROPÄISCHE PATENTSCHRIFT**

(45) Veröffentlichungstag und Bekanntmachung des Hinweises auf die Patenterteilung:
**27.03.2019 Patentblatt 2019/13**

(21) Anmeldenummer: **07802160.7**

(22) Anmeldetag: **03.09.2007**

(51) Int Cl.:
*H02H 3/00* (2006.01)    *G01R 19/25* (2006.01)

(86) Internationale Anmeldenummer:
**PCT/EP2007/007755**

(87) Internationale Veröffentlichungsnummer:
**WO 2009/030258 (12.03.2009 Gazette 2009/11)**

(54) **SCHUTZGERÄT ZUM SCHUTZ EINER ELEKTROTECHNISCHEN ANLAGE UND VERFAHREN ZU DESSEN BETRIEB**

PROTECTIVE DEVICE FOR PROTECTING AN ELECTROTECHNICAL UNIT AND METHOD FOR THE OPERATION THEREOF

APPAREIL DE PROTECTION DESTINÉ A LA PROTECTION D'UNE INSTALLATION ÉLECTROTECHNIQUE, ET PROCÉDÉ PERMETTANT DE LE FAIRE FONCTIONNER

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**19.05.2010 Patentblatt 2010/20**

(73) Patentinhaber: **Siemens Aktiengesellschaft 80333 München (DE)**

(72) Erfinder:
• **MIESKE, Frank 13053 Berlin (DE)**
• **STAMMINGER, Stefan 90409 Nürnberg (DE)**

(56) Entgegenhaltungen:
**US-A1- 2002 107 615    US-B1- 6 385 022 US-B1- 6 392 858**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf ein Schutzgerät zum Schutz einer elektrotechnischen Anlage, insbesondere zum Schutz einer elektrischen Energieversorgungsanlage, wobei das Schutzgerät eine Mehrzahl an Geräteeingangsklemmen und eine Mehrzahl an Funktionsmodulen aufweist, die sich durch eine benutzerseitige Einstellung des Schutzgerätes mit den Geräteeingangsklemmen derart verbinden lassen, dass die Funktionsmodule benutzerseitig definierte Schutzfunktionen ausführen und entsprechende Steuersignale zum Ein- oder Ausschalten zugeordneter Schalter der elektrotechnischen Anlage ausgeben können.

Derartige Schutzgeräte werden beispielsweise unter dem Produktnamen 7UT6x3 von der Siemens AG vertrieben. Diese Geräte stellen eine Vielzahl an Funktionsmodulen zur Verfügung, die durch eine benutzerseitige Einstellung bzw. Parametrierung an die zu schützende Anlage und die jeweils gewünschte Schutzfunktion angepasst werden können.

Außerdem ist ein solches Schutzgerät auch aus der US 6,385,022 bekannt. Das bekannte Schutzgerät weist digitale Signalprozessoren auf, deren einzelne Kanäle mit Strom- und Spannungswandler einer elektrischen Energieversorgungsanlage verbunden werden können.

Der Erfindung liegt die Aufgabe zugrunde, ein Schutzgerät anzugeben, das bei unterschiedlichen Anlagentopologien noch universeller einsetzbar ist als bisherige Schutzgeräte.

Diese Aufgabe wird erfindungsgemäß durch ein Schutzgerät mit den kennzeichnenden Merkmalen des Anspruchs 1 gelöst. Vorteilhafte Ausgestaltungen des erfindungsgemäßen Schutzgeräts sind in Unteransprüchen angegeben.

Danach ist erfindungsgemäß vorgesehen, dass zum Zuordnen der Geräteeingangsklemmen zu den Funktionsmodulen geräteseitig Vorverarbeitungsmodule anlegbar sind, die einer Geräteklemme unter Festlegung der jeweiligen Funktion dieser Geräteklemme zugeordnet werden, indem das Schutzgerät eine Eingaberangiermatrix zur Verfügung stellt, in der für die angelegten Vorverarbeitungsmodule die jeweils zugeordneten Geräteeingangsklemmem des Schutzgeräts und die jeweilige Anschaltungsart definiert werden können, und mit denen sich die Geräteeingangsklemmen des Schutzgerätes und die Funktionsmodule miteinander verbinden lassen, wobei das Schutzgerät für die benutzerseitige Festlegung der Verbindung zwischen den angelegten Vorverarbeitungsmodulen und den Funktionsmodulen eine Ausgaberangiermatrix aufweist, in der für die angelegten Vorverarbeitungsmodule jeweils ein oder mehrere Funktionsmodule definiert werden können, wobei mindestens zwei unterschiedliche Arten von Vorverarbeitungsmodulen zur Verfügung stehen und wobei zumindest eine Art der Vorverarbeitungsmodule zwei unterschiedliche elektrische Anschaltungsarten unterstützt, mit denen das jeweilige Vorverarbeitungsmodul an eine Messstelle der elektrischen Anlage angeschlossen werden kann.

Ein wesentlicher Vorteil des erfindungsgemäßen Schutzgeräts ist darin zu sehen, dass dieses aufgrund der zwischengeschalteten Vorverarbeitungsmodule eine noch größere Flexibilität beim Anschalten des Schutzgeräts an die elektrische Anlage bietet; denn die Festlegung der Funktion einer Geräteeingangsklemme erfolgt erst durch die Zuordnung eines Vorverarbeitungsmoduls. Die Geräteeingangsklemmen bleiben somit völlig frei konfigurierbar, bis eine benutzerseitige Festlegung erfolgt ist. Zusätzlich ist noch ein Vorteil darin begründet, dass für einen Anlagemesspunkt innerhalb des Schutzgeräts beispielsweise zwei oder mehr verschiedene Geräteeingangswandler bzw. zwei oder mehr verschiedene Vorverarbeitungsmodule rangiert werden können und damit das Schutzgerät auch zusätzliche Messaufgaben, wie beispielsweise die Erfassung der Netzqualität, realisieren kann.

Ein weiterer wesentlicher Vorteil des erfindungsgemäßen Schutzgeräts ist darin zu sehen, dass dieses verschiedene Anschaltungsarten zur Verfügung stellt. Dies ermöglicht es einem Benutzer, die Art und Weise, wie die den Funktionsmodulen bereitzustellenden Messwerte ermittelt werden sollen, zusätzlich festzulegen: So kann beispielsweise durch Eingabe einer Anschaltungsart festgelegt werden, dass drei Phase-Phase-Spannungen gemessen werden und diese ausgangsseitig abgegeben werden sollen, oder beispielsweise alternativ, dass nur zwei Phase-Erde-Spannungen gemessen werden, aus denen durch das Vorverarbeitungsmodul drei Phase-Phase-Spannungen ermittelt und ausgangsseitig ausgegeben werden sollen. Die zusätzliche Festlegungsmöglichkeit einer Anschaltungsart stellt also einen weiteren Freiheitsgrad für die Geräteeinstellung zur Verfügung.

Erfindungsgemäß ist vorgesehen, dass das Schutzgerät eine Eingaberangiermatrix, beispielsweise in Form einer Eingaberangiertabelle, zur Verfügung stellt, in der für die angelegten Vorverarbeitungsmodule die jeweils zugeordneten Geräteeingangsklemmen des Schutzgeräts und die jeweilige Anschaltungsart festgelegt werden können. Eine solche Eingaberangiermatrix ermöglicht eine sehr einfache und übersichtliche Geräteeinstellung.

Für die benutzerseitige Festlegung der Verbindung zwischen den angelegten Vorverarbeitungsmodulen und den Funktionsmodulen weist das Schutzgerät erfindungsgemäß eine Ausgaberangiermatrix auf, in der für die angelegten Vorverarbeitungsmodule jeweils ein oder mehrere Funktionsmodule ausgewählt werden können.

Vorzugsweise wird in der Eingaberangiermatrix für die angelegten Vorverarbeitungsmodule jeweils auch die zugeordnete Messstelle der elektrotechnischen Anlage definiert; dies ermöglicht es, auch den konkreten messtechnischen Bezug zur elektrotechnischen Anlage in ein und derselben Matrix oder Tabelle festzulegen.

Für spannungsbezogene und strombezogene Geräteeingangsklemmen kann prinzipiell dieselbe Eingaberangiermatrix verwendet werden; alternativ können auch separate Eingaberangiermatrizen für spannungsbezogene und strombezogene Geräteeingangsklemmen zur Verfügung gestellt werden.

Um die bereits erwähnte Flexibilität durch unterschiedliche Anschaltungsarten bereitzustellen, ist bei einer bevorzugten Ausgestaltung des Schutzgeräts vorgesehen, dass die zumindest eine Art der Vorverarbeitungsmodule eine Umrechnungseinheit aufweist, die geeignet ist, eingangsseitig anliegende Messwerte je nach der benutzerseitig gewählten Anschaltungsart umzurechnen und den zugewiesenen Funktionsmodulen die umgerechneten Messwerte zur Verfügung zu stellen.

Vorzugsweise erfolgt die Umrechnung derart, dass die Vorverarbeitungsmodule den zugewiesenen Funktionsmodulen stets einen Messwertsatz übermitteln, der durch die Art des angelegten Vorverarbeitungsmoduls festgelegt und unabhängig von der gewählten Anschaltungsart des Vorverarbeitungsmoduls ist. So ist die Umrechnungseinheit vorzugsweise geeignet, für jeden Phasenleiter einer dreiphasigen Leitung ausgangsseitig jeweils phasenleiterbezogene Messwerte auszugeben, und zwar für zumindest zwei unterschiedliche Anschaltungsarten, von denen bei mindestens einer maximal zwei Phasenleiter der dreiphasigen Leitung an das Schutzgerät angeschlossen sind. Beispielsweise ist die Umrechnungseinheit geeignet, im Falle einer Anschlussart mit Messwerten zweier Phasenleiter Messwerte für den dritten Phasenleiter zu berechnen und diesen gemeinsam mit den beiden eingangsseitig anliegenden phasenleiterbezogenen Messwerten den zugewiesenen Funktionsmodulen zur Verfügung zu stellen.

Beispielsweise ist die Umrechnungseinheit geeignet, für den Fall, dass die elektrische Anlage ein isoliertes elektrisches Netz oder einen Teil davon bildet, unter Berücksichtigung eingangsseitig anliegender phasenleiterbezogener Strommesswerte zweier Phasenleiter Strommesswerte für den dritten Phasenleiter zu berechnen und diesen gemeinsam mit den beiden eingangsseitig anliegenden phasenleiterbezogenen Strommesswerten den zugewiesenen Funktionsmodulen zur Verfügung zu stellen. Die Strommesswerte für den dritten Phasenleiter werden beispielsweise errechnet gemäß:

$$\underline{Ib} = - (\underline{Ia} + \underline{Ic})$$

unter der Voraussetzung, dass in einem isolierten Netz das Nullsystem $3\underline{I0} = 0$ ist.

Auch kann die Umrechnungseinheit geeignet sein, unter Berücksichtigung eingangsseitig anliegender phasenleiterbezogener Phase-Erde-Spannungsmesswerte zweier Phasenleiter Phase-Phase-Spannungsmesswerte für alle drei Phasenleiter zu berechnen und letztgenannten den zugewiesenen Funktionsmodulen zur Verfügung zu stellen. Die Phase-Phase-Spannungsmesswerte werden beispielsweise errechnet gemäß:

$$\underline{Vbc} = - (\underline{Vab} + \underline{Vca})$$

Im Übrigen kann zumindest eine Art der Vorverarbeitungsmodule geeignet sein, für einen einzigen Phasenleiter einer dreiphasigen Leitung ausgangsseitig phasenleiterbezogene Spannungsmesswerte oder phasenleiterbezogene Strommesswerte auszugeben.

Besonders bevorzugt sind zumindest vier Arten von Vorverarbeitungsmodulen benutzerseitig anleg- bzw. instanziierbar, nämlich

- eine Art, die geeignet ist, für einen einzigen Phasenleiter einer dreiphasigen Leitung ausgangsseitig phasenleiterbezogene Spannungsmesswerte auszugeben,
- eine Art, die geeignet ist, für einen einzigen Phasenleiter einer dreiphasigen Leitung ausgangsseitig phasenleiterbezogene Strommesswerte auszugeben,
- eine Art, die geeignet ist, unter Berücksichtigung eingangsseitig anliegender phasenleiterbezogener Strommesswerte von maximal zwei Phasenleitern der Leitung Strommesswerte für alle drei Phasenleiter auszugeben, und
- eine Art, die geeignet ist, unter Berücksichtigung eingangsseitig anliegender phasenleiterbezogener Spannungsmesswerte von maximal zwei Phasenleitern der Leitung Phase-Phase-Spannungsmesswerte für alle drei Phasenleiter auszugeben.

Um eine fehlerhafte Gerätekonfiguration zu vermeiden, kann das Schutzgerät im Übrigen derart ausgestaltet werden, dass jeder verwendeten Geräteanschlussklemme des Schutzgeräts jeweils ausschließlich ein einziges Vorverarbeitungsmodul zugewiesen werden kann; eine solche Ausgestaltung vermeidet versehentliche Doppelbelegungen.

Um Messwerte unter unterschiedlichen Gesichtspunkten auswerten zu können, wird es darüber hinaus als vorteilhaft angesehen, wenn die Vorverarbeitungsmodule derart ausgestaltet sind, dass jedem Vorverarbeitungsmodul parallel mehrere Funktionsmodule zugeordnet werden können.

Als Erfindung wird außerdem ein Verfahren zum Betreiben eines Schutzgerätes angesehen, bei dem eine Mehrzahl an Geräteeingangsklemmen und eine Mehrzahl an Funktionsmodulen durch eine benutzerseitige Einstellung des Schutzgerätes miteinander derart verbunden werden, dass die Funktionsmodule benutzerseitig definierte Schutzfunktionen ausführen und entsprechende Steuersignale zum Ein- oder Ausschalten zugeordneter Schalter der elektrotechnischen Anlage ausgeben können.

Erfindungsgemäß ist bezüglich eines solchen Verfahrens vorgesehen, dass mindestens ein Vorverarbeitungsmodul angelegt wird, dem angelegten Vorverarbeitungsmodul mindestens eine Geräteeingangsklemme und mindestens ein Funktionsmodul zugeordnet wird und die mindestens eine Geräteeingangsklemme mit dem mindestens einen Funktionsmodul durch das Vorverarbeitungsmodul verbunden wird, zur Festlegung der Arbeitsweise des Vorverarbeitungsmoduls diesem eine elektrische Anschaltungsart zugewiesen wird und die dem Vorverarbeitungsmodul zugewiesene mindestens eine Geräteeingangsklemme an eine Messstelle der elektrischen Anlage gemäß der dem Vorverarbeitungsmodul zugewiesenen Anschaltungsart angeschlossen wird.

Bezüglich der Vorteile des erfindungsgemäßen Verfahrens und bezüglich vorteilhafter Ausgestaltungen des Verfahrens sei auf die obigen Ausführungen im Zusammenhang mit dem erfindungsgemäßen Schutzgerät verwiesen.

Die Erfindung wird nachfolgend anhand von Ausführungsbeispielen näher erläutert; dabei zeigen beispielhaft

Figur 1      ein Ausführungsbeispiel einer elektrischen Anlage mit einem Transformator und einem Schutzgerät,

Figur 2      beispielhaft den Anschluss des Schutzgeräts gemäß Figur 1 an eine Strom-Messstelle der elektrischen Anlage näher im Detail,

Figur 3      beispielhaft den Anschluss des Schutzgeräts gemäß Figur 1 an eine Spannungs-Messstelle der elektrischen Anlage näher im Detail,

Figur 4      ein Ausführungsbeispiel einer Rangiermatrix für die Stromanschlüsse des Schutzgeräts gemäß Figur 1 und

Figur 5      ein Ausführungsbeispiel einer Rangiermatrix für die Spannungsanschlüsse des Schutzgeräts gemäß Figur 1.

In den Figuren werden der Übersicht für identische oder vergleichbare Komponenten stets dieselben Bezugszeichen verwendet.

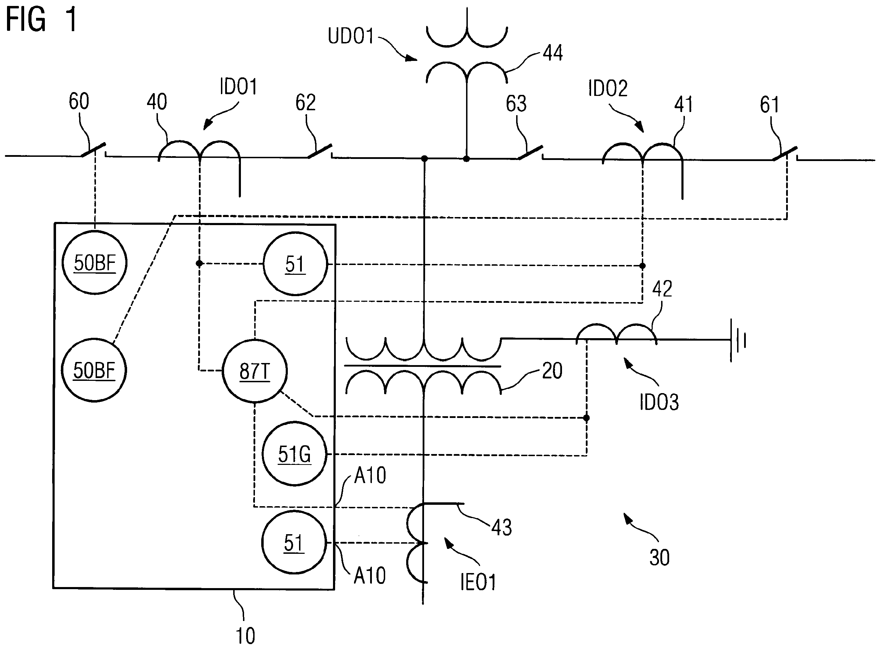

In der Figur 1 ist ein Ausführungsbeispiel für ein Schutzgerät 10 dargestellt, das benutzerseitig zum Schutz eines Transformators 20 einer elektrischen Anlage 30 parametriert wurde. Es lässt sich erkennen, dass das Schutzgerät 10 bei der beispielhaften Parametrierung gemäß der Figur 1 eine Vielzahl an Funktionsmodulen bereitstellt, unter anderem beispielsweise zwei Überstromzeitschutz-Funktionsmodule 51, ein Erdstrom-Überstromzeitschutz-Funktionsmodul 51G, zwei Schalterversagerschutz-Funktionsmodule 50BF sowie ein Transformator-Differentialschutz-Funktionsmodul 87T.

Die Anschluss der Funktionsmodule an die Gerätsanschlussklemmen A10 erfolgt über softwaremäßig realisierte Vorverarbeitungsmodule, die in der Figur 1 der Übersicht halber nicht gezeigt sind; schematisch dargestellt ist lediglich der Anschluss des Schutzgeräts an einige der Messstellen ID01, ID02, ID03 und IE01 der elektrischen Anlage 30.

Wie sich in der Figur 1 außerdem erkennen lässt, weist die elektrische Anlage 30 eine Mehrzahl an Primärwandlereinheiten 40, 41, 42, 43 und 44 auf, die den Messstellen ID01, ID02, ID03, IE04 und UD01 der elektrotechnischen Anlage 10 zugeordnet sind. Außerdem sind Schalter 60, 61, 62 und 63 gezeigt, von denen die Schalter 60 und 61 vom Schutzgerät 10 ansteuerbar und im Falle eines Fehlers oder einer Überlastsituation abschaltbar sind.

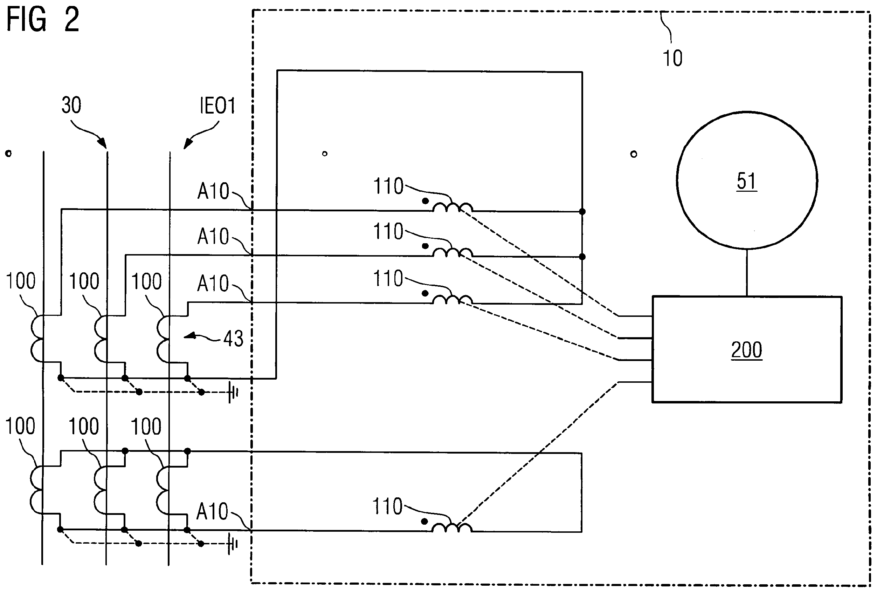

In der Figur 2 ist beispielhaft der Anschluss des Schutzgeräts 10 an die Messstelle IE01 näher im Detail gezeigt. Es lässt sich erkennen, dass die Primärwandlereinheit 43 durch eine Mehrzahl an phasenleiterbezogenen Primärwandlern 100 gebildet ist, die an Geräteanschlussklemmen A10 des Schutzgeräts 10 angeschlossen sind. Mit den Geräteanschlussklemmen A10 sind eingangsseitig Sekundärwandler 110 des Schutzgeräts 10 verbunden; diesen und damit den Geräteanschlussklemmen A10 zugeordnet ist ein softwaremäßig realisiertes Vorverarbeitungsmodul 200, das benutzerseitig angelegt bzw. instanziiert wurde und beispielsweise das Überstromzeitschutz-Funktionsmodul 51 gemäß Figur 1 mit den Geräteanschlussklemmen A10 verbindet.

Das Schutzgerät 10 stellt vorzugsweise vier unterschiedliche Arten an softwaremäßig realisierten Vorverarbeitungsmodulen 200 zur Verfügung, nämlich

-    dreiphasige Strom-Vorverarbeitungsmodule,
-    dreiphasige Spannungs-Vorverarbeitungsmodule,
-    einphasige Strom-Vorverarbeitungsmodule und
-    einphasige Spannungs-Vorverarbeitungsmodule.

Die dreiphasigen Strom-Vorverarbeitungsmodule unterstützen unterschiedliche elektrische Anschaltungsarten, mit denen das Vorverarbeitungsmodul an eine Messstelle ID01, ID02, ID03 bzw. IE04 der elektrotechnischen Anlage 10 angeschlossen werden kann. Vorgesehen sind vorzugsweise einzelne oder alle der folgenden Anschaltungsarten:

| Anschaltungsart | Funktionsbeschreibung |
|---|---|

| Nr. 1 | Messung von drei Leiterströmen und Messung des Nullstroms durch Bildung der physikalischen Stromsumme mit einem vierten Eingangswandler |
|---|---|
| Nr. 2 | Messung von drei Leiterströmen |
| Nr. 3 | Messung von drei Leiterströmen und Messung |

des Nullstroms durch einen Kabelumbauwandler

Nr. 4 Messung von drei Leiterströmen und Messung des Nullstroms durch einen zusätzlichen Summenstromwandler

Nr. 5 Messung von zwei Leiterströmen und Berechnung des dritten Leiterstroms bei isolierten oder gelöschten Netzen

Nr. 6 Messung von zwei Leiterströmen und Berechnung des dritten Leiterstroms bei isolierten oder gelöschten Netzen sowie Messung des Nullstroms durch einen Kabelumbauwandler

Nr. 7 Messung von zwei Leiterströmen und Berechnung des dritten Leiterstroms bei isolierten oder gelöschten Netzen und Messung des Nullstroms durch einen zusätzlichen Summenstromwandler

Nr. 8 Messung zweier Leiterströme sowie des Nullstroms durch einen zusätzlichen Summenstromwandler und des Nullstroms durch einen Kabelumbauwandler

Nr. 9 Messung von zwei Leiterströmen

Nr. 10 Messung von zwei Leiterströmen und Messung des Nullstroms durch einen zusätzlichen Summenstromwandler

Nr. 11 Messung von zwei Leiterströmen und Messung des Nullstroms durch einen Kabelumbauwandler

Die dreiphasigen Spannungs-Vorverarbeitungsmodule unterstützen ebenfalls unterschiedliche elektrische Anschaltungsarten, mit denen das Vorverarbeitungsmodul an eine Messstelle der elektrotechnischen Anlage 10, beispielsweise die Messstelle UD01, angeschlossen werden kann. Vorgesehen sind vorzugsweise einzelne oder alle der folgenden Anschaltungsarten:

Anschaltungs- Funktionsbeschreibung

art

Nr. 1 Spannungswandleranschluss an drei in Sternschaltung geschaltete Spannungswandler und Anschluss an eine offene Dreieckswicklung

Nr. 2 Spannungswandleranschluss an drei in Sternschaltung geschaltete Spannungswandler

Nr. 3 Messung zweier verketteter Spannungen mit drei in Sternschaltung geschalteten Spannungswandlern sowie Anschluss an eine offene Dreieckswicklung

Nr. 4 Messung dreier verketteter Spannungen mit drei in Sternschaltung geschalteten Spannungswandler sowie Anschluss an eine offene Dreieckswicklung

Nr. 5 Messung dreier verketteter Spannungen

Bei dem Vorverarbeitungsmodul 200 gemäß der Figur 2 handelt es sich beispielsweise um ein dreiphasiges Strom-Vorverarbeitungsmodul, so dass die oben aufgeführten elf Anschaltungsarten zur Verfügung stehen. Für die in der Figur 2 gezeigte Beschaltung der Eingangsklemmen A10 wird beispielsweise die Anschaltungsart Nr. 1 gewählt, weil eingangsseitig Messwerte dreier Leiterströme sowie Messwerte eines Nullstroms, der durch Bildung einer physikalischen Stromsumme gebildet wird, zur Verfügung stehen.

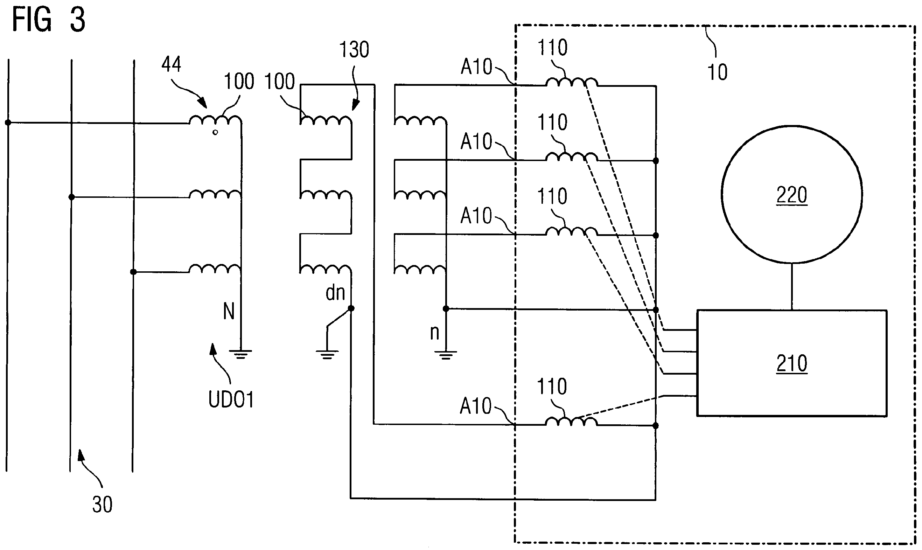

In der Figur 3 ist beispielhaft der Anschluss des Schutzgeräts 10 an die Messstelle UD01 gemäß der Figur 1 gezeigt. Es lässt sich erkennen, dass die Primärwandlereinheit 44 durch eine Mehrzahl an phasenleiterbezogenen Primärwandlern 100 gebildet ist, die an Geräteanschlussklemmen A10 des Schutzgeräts 10 angeschlossen sind. Mit den Geräteanschlussklemmen A10 sind eingangsseitig Sekundärwandler 110 des Schutzgeräts 10 verbunden; diesen und damit den Geräteanschlussklemmen A10 zugeordnet ist ein Vorverarbeitungsmodul 210, das beispielsweise ein Überspannungsschutz-Funktionsmodul 220 mit den Geräteanschlussklemmen A10 verbindet.

Bei dem Vorverarbeitungsmodul 210 handelt es sich beispielsweise um ein dreiphasiges Spannungs-Vorverarbeitungsmodul, so dass die oben aufgeführten fünf Anschaltungsarten zur Verfügung stehen. Für die in der Figur 3 gezeigte Beschaltung der Eingangsklemmen A10 wird beispielsweise die Anschaltungsart Nr. 1 gewählt, weil eingangsseitig Messwerte dreier Leiterspannungen sowie Messwerte der offenen Dreiecksschaltung 130 zur Verfügung stehen.

Die Belegung der Geräteanschlussklemmen A10 des Schutzgerätes 10 wird vorzugsweise in einer Rangiermatrix definiert.

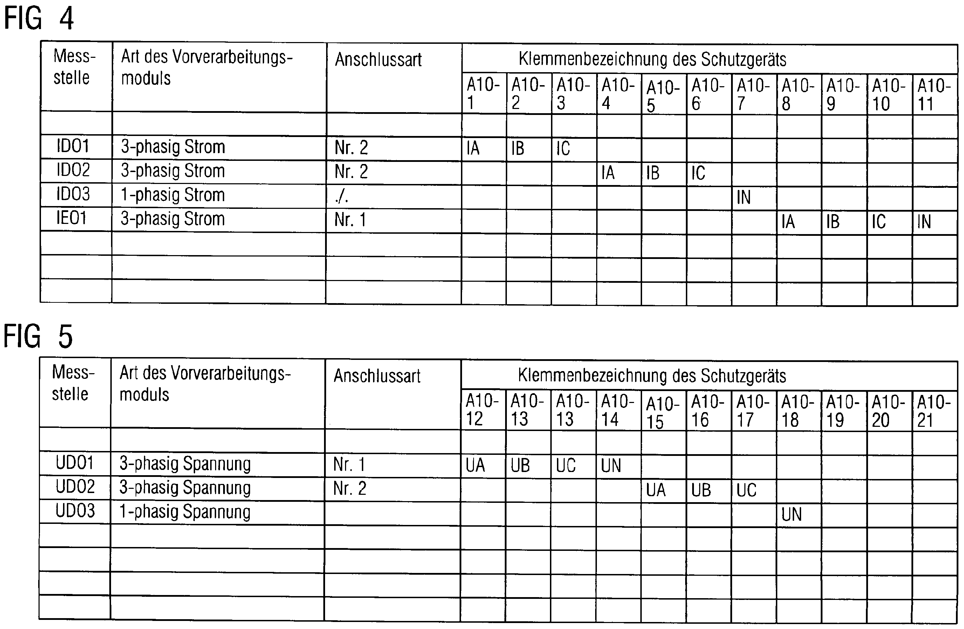

Eine solche Rangiermatrix kann für strombezogene Geräteanschlussklemmen des Schutzgerätes beispielsweise so aussehen, wie dies in der Tabelle in der Figur 4 gezeigt ist. Die Abkürzungen IA, IB und IC bezeichnen in der Tabelle die Ströme für die Phase A, die Phase B oder die Phase C. IN bezeichnet den Nullstrom an der jeweiligen Messstelle. Die Geräteanschlussklemmen können beispielsweise durchnummeriert werden, zum Beispiel gemäß A10-1, A10-2, usw.

Die Figur 5 zeigt beispielhaft eine Rangiermatrix für spannungsbezogene Geräteanschlussklemmen sowie deren Belegung. Die Abkürzungen UA, UB und UC bezeichnen in der Tabelle die Spannungen für die Phase A, die Phase B oder die Phase C. UN bezeichnet die Spannung an einer offenen Dreieckswicklung, beispielsweise der offenen Dreieckswicklung 130 gemäß der Figur 3.

Alternativ kann die Belegung der Geräteanschlussklemmen A10 für spannungsbezogene Geräteanschlussklemmen und für strombezogene Geräteanschlussklemmen auch in ein und derselben Rangiermatrix zusammengefasst sein.

**Patentansprüche**

1. Schutzgerät (10) zum Schutz einer elektrotechnischen Anlage (30), insbesondere zum Schutz einer elektrischen Energieversorgungsanlage, wobei das Schutzgerät eine Mehrzahl an Geräteeingangsklemmen (A10) und eine Mehrzahl an Funktionsmodulen (220, 51) aufweist, die sich durch eine benutzerseitige Einstellung des Schutzgerätes mit den Geräteeingangsklemmen derart verbinden lassen, dass die Funktionsmodule benutzerseitig definierte Schutzfunktionen ausführen und entsprechende Steuersignale zum Ein- oder Ausschalten zugeordneter Schalter der elektrotechnischen Anlage ausgeben können,
   **dadurch gekennzeichnet, dass**
   zum Zuordnen der Geräteeingangsklemmen zu den Funktionsmodulen geräteseitig Vorverarbeitungsmodule (200, 210) anlegbar sind, die einer Geräteklemme unter Festlegung der jeweiligen Funktion dieser Geräteklemme zugeordnet werden, indem das Schutzgerät eine Eingaberangiermatrix zur Verfügung stellt, in der für die angelegten Vorverarbeitungsmodule die jeweils zugeordneten Geräteeingangsklemmem des Schutzgeräts und die jeweilige Anschaltungsart definiert werden können, und mit denen sich die Geräteeingangsklemmen des Schutzgerätes und die Funktionsmodule miteinander verbinden lassen,
   wobei das Schutzgerät für die benutzerseitige Festlegung der Verbindung zwischen den angelegten Vorverarbeitungsmodulen und den Funktionsmodulen eine Ausgaberangiermatrix aufweist, in der für die angelegten Vorverarbeitungsmodule jeweils ein oder mehrere Funktionsmodule definiert werden können,

   - wobei mindestens zwei unterschiedliche Arten von Vorverarbeitungsmodulen zur Verfügung stehen und
   - wobei zumindest eine Art der Vorverarbeitungsmodule zwei unterschiedliche elektrische Anschaltungsarten unterstützt, mit denen das jeweilige Vorverarbeitungsmodul an eine Messstelle (ID01, ID02, ID03, IE04, UD01) der elektrischen Anlage angeschlossen werden kann.

2. Schutzgerät nach Anspruch 1,
   **dadurch gekennzeichnet, dass**
   in der Eingaberangiermatrix für die angelegten Vorverarbeitungsmodule jeweils die zugeordnete Messstelle der elektrotechnischen Anlage definiert werden kann.

3. Schutzgerät nach Anspruch 1 oder 2,
   **dadurch gekennzeichne**t, dass
   die zumindest eine Art der Vorverarbeitungsmodule eine Umrechnungseinheit aufweist, die geeignet ist, eingangsseitig anliegende Messwerte je nach der benutzerseitig gewählten Anschaltungsart umzurechnen und den zugewiesenen Funktionsmodulen die umgerechneten Messwerte zur Verfügung zu stellen.

4. Schutzgerät nach Anspruch 3,
   **dadurch gekennzeichnet, dass**
   die Umrechnung derart erfolgt, dass die Vorverarbeitungsmodule den zugewiesenen Funktionsmodulen stets einen Messwertsatz übermitteln, der durch die Art des angelegten Vorverarbeitungsmoduls festgelegt und unabhängig von der gewählten Anschaltungsart des Vorverarbeitungsmoduls ist.

5. Schutzgerät nach einem der voranstehenden Ansprüche 3-4,
   **dadurch gekennzeichnet, dass**
   die Umrechnungseinheit geeignet ist, für jeden Phasenleiter einer dreiphasigen Leitung ausgangsseitig jeweils phasenleiterbezogene Messwerte auszugeben, und zwar für zumindest zwei unterschiedliche Anschaltungsarten, von denen bei mindestens einer maximal zwei Phasenleiter der dreiphasigen Leitung an das Schutzgerät angeschlossen sind.

6. Schutzgerät Anspruch 5,
   **dadur chgekennzeichnet**, dass
   die Umrechnungseinheit geeignet ist, im Falle einer Anschlussart mit Messwerten zweier Phasenleiter Messwerte für den dritten Phasenleiter zu berechnen und diesen gemeinsam mit den beiden eingangsseitig anliegenden phasenleiterbezogenen Messwerten den zugewiesenen Funktionsmodulen zur Verfügung zu stellen.

7. Schutzgerät nach Anspruch 6,
   **dadurch gekennzeichnet, dass**
   die Umrechnungseinheit geeignet ist, für den Fall, dass die elektrische Anlage ein isoliertes elektrisches Netz oder einen Teil davon bildet, unter Berücksichtigung eingangsseitig anliegender phasenleiterbezogener Strommesswerte zweier Phasenleiter Strommesswerte für den dritten Phasenleiter zu berechnen und diesen gemeinsam mit den beiden eingangsseitig anliegenden phasenleiterbezogenen Strommesswerten den zugewiesenen Funktionsmodulen zur Verfügung zu stellen.

8. Schutzgerät nach Anspruch 6,
   **dadurch gekennzeichnet, dass**
   die Umrechnungseinheit geeignet ist, unter Berücksichtigung eingangsseitig anliegender phasenleiterbezogener Phase-Erde-Spannungsmesswerte zweier Phasenleiter Phase-Phase-Spannungsmesswerte für alle drei Phasenleiter zu berechnen und letztgenannten den zugewiesenen Funktionsmodulen zur Verfügung zu stellen.

**9.** Schutzgerät nach einem der voranstehenden Ansprüche,
**dadurch gekennzeichnet, dass**
zumindest eine Art der Vorverarbeitungsmodule geeignet ist, für einen einzigen Phasenleiter einer dreiphasigen Leitung ausgangsseitig phasenleiterbezogene Spannungsmesswerte auszugeben.

**10.** Schutzgerät nach einem der voranstehenden Ansprüche,
**dadurch gekennzeichnet, dass**
zumindest eine Art der Vorverarbeitungsmodule geeignet ist, für einen einzigen Phasenleiter einer dreiphasigen Leitung ausgangsseitig phasenleiterbezogene Strommesswerte auszugeben.

**11.** Schutzgerät nach einem der voranstehenden Ansprüche,
**dadurch gekennzeichnet, dass**
zumindest vier Arten von Vorverarbeitungsmodulen vorhanden sind, nämlich

- eine Art, die geeignet ist, für einen einzigen Phasenleiter einer dreiphasigen Leitung ausgangsseitig phasenleiterbezogene Spannungsmesswerte auszugeben,
- eine Art, die geeignet ist, für einen einzigen Phasenleiter einer dreiphasigen Leitung ausgangsseitig phasenleiterbezogene Strommesswerte auszugeben,
- eine Art, die geeignet ist, unter Berücksichtigung eingangsseitig anliegender phasenleiterbezogener Strommesswerte von maximal zwei Phasenleitern der Leitung Strommesswerte für alle drei Phasenleiter auszugeben, und
- eine Art, die geeignet ist, unter Berücksichtigung eingangsseitig anliegender phasenleiterbezogener Spannungsmesswerte von maximal zwei Phasenleitern der Leitung Phase-Phase-Spannungsmesswerte für alle drei Phasenleiter auszugeben.

**12.** Schutzgerät nach einem der voranstehenden Ansprüche,
**dadurch gekennzeichnet, dass**
das Schutzgerät derart ausgestaltet ist, dass jeder verwendeten Geräteanschlussklemme des Schutzgeräts jeweils ausschließlich ein einziges Vorverarbeitungsmodul zugewiesen werden kann.

**13.** Schutzgerät nach einem der voranstehenden Ansprüche,
**dadurch gekennzeichnet, dass**
die Vorverarbeitungsmodule derart ausgestaltet sind, dass jedem Vorverarbeitungsmodul parallel mehrere Funktionsmodule zugeordnet werden können.

**14.** Verfahren zum Betreiben eines Schutzgerätes (10), bei dem eine Mehrzahl an Geräteeingangsklemmen (A10) und eine Mehrzahl an Funktionsmodulen (51, 220) durch eine benutzerseitige Einstellung des Schutzgerätes miteinander derart verbunden werden, dass die Funktionsmodule benutzerseitig definierte Schutzfunktionen ausführen und entsprechende Steuersignale zum Ein- oder Ausschalten zugeordneter Schalter der elektrotechnischen Anlage ausgeben können,
**dadurch gekennzeichnet, dass**

- Vorverarbeitungsmodule (200, 210) angelegt werden, wobei mindestens zwei unterschiedliche Arten von Vorverarbeitungsmodulen zur Verfügung stehen, und wobei zumindest eine Art der Vorverarbeitungsmodule zwei unterschiedliche Anschaltungsarten unterstützt, mit denen das jeweilige Vorverarbeitungsmodul an eine Messstelle (ID01, ID02, ID03, IE04, UD01 der elektrotechnischen Anlage angeschlossen werden kann;
- dem jeweiligen angelegten Vorverarbeitungsmodul mindestens eine Geräteeingangsklemme (A10) und mindestens ein Funktionsmodul (51, 220) unter Festlegung der Funktion der Geräteklemme zugeordnet wird, indem das Schutzgerät eine Eingaberangiermatrix zur Verfügung stellt, in der für die angelegten Vorverarbeitungsmodule die jeweils zugeordneten Geräteeingangsklemmem des Schutzgeräts und die jeweilige Anschaltungsart definiert werden können, und die mindestens eine Geräteeingangsklemme mit dem mindestens einen Funktionsmodul durch das Vorverarbeitungsmodul verbunden wird,
- zur Festlegung der Arbeitsweise des Vorverarbeitungsmoduls diesem eine elektrische Anschaltungsart zugewiesen wird;
- von dem Schutzgerät für die benutzerseitige Festlegung der Verbindung zwischen den angelegten Vorverarbeitungsmodulen und den Funktionsmodulen eine Ausgaberangiermatrix zur Verfügung gestellt wird, in der für die angelegten Vorverarbeitungsmodule jeweils ein oder mehrere Funktionsmodule definiert werden können;
- die dem Vorverarbeitungsmodul zugewiesene mindestens eine Geräteeingangsklemme an eine Messstelle (ID01, ID02, ID03, IE01, UD01) der elektrischen Anlage gemäß der dem Vorverarbeitungsmodul zugewiesenen Anschaltungsart angeschlossen wird.

**Claims**

**1.** Protective device (10) for protecting an electrotechnical system (30), in particular for protecting an electrical energy supply system, wherein the protective device has a plurality of device input terminals (A10) and a plurality of functional modules (220, 51), which can be connected to the device input terminals by means of a setting of the protective device on the part of the user in such a way that the functional modules implement protection functions defined on the part of the user and can output corresponding control signals for switching on or off assigned switches of the electrotechnical system, **characterized in that**, to assign the device input terminals to the functional modules, preprocessing modules (200, 210) can be provided on the device side, said preprocessing modules being assigned to a device terminal by stipulating the respective function of said device terminal by virtue of the protective device making available an input ranking matrix in which the respectively assigned device input terminals of the protective device and the respective connection type can be defined for the provided preprocessing modules, and which can be used to connect the device input terminals of the protective device and the functional modules to one another, wherein the protective device has an output ranking matrix for the stipulation of the connection between the provided preprocessing modules and the functional modules on the part of the user, in which output ranking matrix one or more functional modules can be defined in each case for the provided preprocessing modules,

- wherein at least two different types of preprocessing module are made available and
- wherein at least one type of preprocessing module supports two different electrical connection types, which can be used to connect the respective preprocessing module to a measurement location (ID01, ID02, ID03, IE04, UD01) of the electrical system.

2. Protective device according to Claim 1,
   **characterized in that**
   the respectively assigned measurement location of the electrotechnical system for the provided preprocessing modules can be defined in the input ranking matrix.

3. Protective device according to Claim 1 or 2,
   **characterized in that**
   the at least one type of preprocessing module has a conversion unit, which is suitable for converting measurement values present on the input side depending on the connection type selected on the part of the user and for making the converted measurement values available to the allocated functional modules.

4. Protective device according to Claim 3,
   **characterized in that**
   the conversion takes place in such a way that the preprocessing modules always transmit a measurement value set to the allocated functional modules, said measurement value set being stipulated by the type of preprocessing module provided and being independent of the selected connection type of the preprocessing module.

5. Protective device according to one of the preceding Claims 3-4,
   **characterized in that**
   the conversion unit is suitable for outputting on the output side respective phase-conductor-related measurement values for each phase conductor of a three-phase line, and specifically for at least two different connection types, in the case of at least one of which, a maximum of two phase conductors of the three-phase line are connected to the protective device.

6. Protective device according to Claim 5,
   **characterized in that**
   the conversion unit is suitable, in the case of a connection type with measurement values of two phase conductors, for calculating measurement values for the third phase conductor and for making said measurement values available to the allocated functional modules together with the two phase-conductor-related measurement values present on the input side.

7. Protective device according to Claim 6,
   **characterized in that**
   the conversion unit is suitable, in the case that the electrical system forms an insulated electrical grid or a part thereof, for calculating current measurement values for the third phase conductor taking into account phase-conductor-related current measurement values, present on the input side, of two phase conductors and for making said current measurement values available to the allocated functional modules together with the two phase-conductor-related current measurement values present on the input side.

8. Protective device according to Claim 6,
   **characterized in that**
   the conversion unit is suitable for calculating phase-to-phase voltage measurement values for all three phase conductors taking into account phase-conductor-related phase-to-earth voltage measurement values, present on the input side, of two phase conductors and for making said phase-to-phase voltage measurement values available to the allocated functional modules.

9. Protective device according to one of the preceding claims,

**characterized in that**

at least one type of preprocessing module is suitable for outputting on the output side phase-conductor-related voltage measurement values for a single phase conductor of a three-phase line.

10. Protective device according to one of the preceding claims,

**characterized in that**

at least one type of preprocessing module is suitable for outputting on the output side phase-conductor-related current measurement values for a single phase conductor of a three-phase line.

11. Protective device according to one of the preceding claims,

**characterized in that**

there are at least four types of preprocessing module, namely

- a type suitable for outputting on the output side phase-conductor-related voltage measurement values for a single phase conductor of a three-phase line,
- a type suitable for outputting on the output side phase-conductor-related current measurement values for a single phase conductor of a three-phase line,
- a type suitable for outputting current measurement values for all three phase conductors taking into account phase-conductor-related current measurement values, present on the input side, of at most two phase conductors of the line, and
- a type suitable for outputting phase-to-phase voltage measurement values for all three phase conductors taking into account phase-conductor-related voltage measurement values, present on the input side, of at most two phase conductors of the line.

12. Protective device according to one of the preceding claims,

**characterized in that**

the protective device is designed in such a way that only one respective single preprocessing module can be allocated to each used device connection terminal of the protective device.

13. Protective device according to one of the preceding claims,

**characterized in that**

the preprocessing modules are designed in such a way that a plurality of functional modules can be assigned to each preprocessing module in parallel.

14. Method for operating a protective device (10), in which a plurality of device input terminals (A10) and a plurality of functional modules (51, 220) are connected to one another by means of a setting of the protective device on the part of the user in such a way that the functional modules implement protection functions defined on the part of the user and can output corresponding control signals for switching on or off assigned switches of the electrotechnical system,

**characterized in that**

- preprocessing modules (200, 210) are provided, wherein at least two different types of preprocessing module are made available, and wherein at least one type of preprocessing module supports two different connection types, which can be used to connect the respective preprocessing module to a measurement location (ID01, ID02, ID03, IE04, UD01) of the electrotechnical system;
- at least one device input terminal (A10) and at least one functional module (51, 220) is assigned to the respectively provided preprocessing module by stipulating the function of the device terminal by virtue of the protective device making available an input ranking matrix, in which the respectively assigned device input terminals of the protective device and the respective connection type can be defined for the provided preprocessing modules, and the at least one device input terminal is connected to the at least one functional module by way of the preprocessing module,
- an electrical connection type is allocated to the preprocessing module to stipulate the functioning thereof;
- the protective device makes available an output ranking matrix for the stipulation of the connection between the provided preprocessing modules and the functional modules on the part of the user, in which output ranking matrix one or more functional modules can be defined in each case for the provided preprocessing modules;
- the at least one device input terminal allocated to the preprocessing module is connected to a measurement location (ID01, ID02, ID03, IE01, UD01) of the electrical system according to the connection type allocated to the preprocessing module.

**Revendications**

1. Appareil (10) de protection pour protéger une installation (30) électrotechnique, notamment pour protéger une installation d'alimentation en énergie électrique, l'appareil de protection ayant une pluralité de bornes (A10) d'entrée d'appareil et une pluralité de modules (220, 51) fonctionnels, qui, par un réglage, de la part de l'utilisateur, de l'appareil de protection, peut être reliée aux bornes d'entrée d'appareil, de manière à ce que les modules fonctionnels exécutent des fonctions de protection définies de la part de l'utilisateur et puissent émettre des signaux de commande correspondants pour fermer ou ouvrir un interrupteur associé de l'installation électrotechnique,
**caractérisé en ce que**
pour associer les bornes d'entrée d'appareil aux modules fonctionnels, il peut être mis, du côté des appareils, des modules (200, 210) de traitement préalable, qui sont associés à une borne d'appareil avec fixation de la fonction respective de cette borne d'appareil, par le fait que l'appareil de protection dispose d'une matrice de tri d'entrée, dans laquelle il peut être défini, pour les modules de traitement préalable appliqués, les bornes d'entrée d'appareil associées respectivement de l'appareil de protection et le type de branchement respectif, et par lesquels les bornes d'entrée d'appareil de l'appareil de commande et les modules fonctionnels peuvent être reliés entre eux, dans lequel l'appareil de protection a, pour la fixation, de la part de l'utilisateur, de la liaison entre le module de traitement préalable appliqué et les modules fonctionnels, une matrice de tri de sortie, dans laquelle il peut être défini, pour les modules de traitement préalable appliqués, respectivement, un module fonctionnel ou plusieurs modules fonctionnels,

- dans lequel au moins deux types différents de modules de traitement préalable sont à disposition et
- dans lequel au moins un type des modules de traitement préalable assiste deux types de branchement électrique différents, par lesquels le module de traitement préalable respectif peut être raccordé à un point (ID01, ID02, ID03, IE04, UD01) de mesure de l'installation électrique.

2. Appareil de protection suivant la revendication 1, **caractérisé en ce que**,
respectivement, le point de mesure associé de l'installation électrotechnique peut être défini dans la matrice de tri d'entrée des modules de traitement préalable appliqués.

3. Appareil de protection suivant la revendication 1 ou 2,
**caractérisé en ce que**
le au moins un type des modules de traitement préalable a une unité de transformation par le calcul, propre à transformer par le calcul des valeurs de mesure se trouvant du côté de l'entrée suivant le type de branchement choisi de la part de l'utilisateur et à mettre les valeurs de mesure transformées par le calcul à disposition des modules fonctionnels affectés.

4. Appareil de protection suivant la revendication 3, **caractérisé en ce que**
la transformation par le calcul s'effectue de manière à ce que les modules de traitement préalable transmettent aux modules fonctionnels affectés toujours un jeu de valeurs de mesure, qui est fixé par le type du module de traitement préalable appliqué et qui est indépendant du type de branchement choisi pour le module de traitement préalable.

5. Appareil de protection suivant l'une des revendications précédentes 3 à 4,
**caractérisé en ce que**
l'unité de transformation par le calcul est propre à émettre, pour chaque conducteur de phase d'une ligne triphasée, du côté de la sortie, respectivement des valeurs de mesure se rapportant aux conducteurs de phase, et cela pour au moins deux types de branchements différents, dont, pour au moins l'un, au maximum deux conducteurs de phase de la ligne triphasée sont branchés à l'appareil de protection.

6. Appareil de protection suivant la revendication 5, **caractérisé en ce que**
l'unité de transformation par le calcul est propre à calculer, dans le cas d'un type de branchement, par des valeurs de mesure de deux conducteurs de phase, des valeurs de mesure pour le troisième conducteur de phase, et à mettre celles-ci, conjointement avec les deux valeurs de mesure se rapportant aux conducteurs de phase se trouvant du côté de l'entrée, à disposition des modules fonctionnels affectés.

7. Appareil de protection suivant la revendication 6, **caractérisé en ce que**
l'unité de transformation par le calcul est propre, dans le cas où l'installation électrique forme un réseau électrique isolé ou une partie de celui-ci, en tenant compte de valeurs de mesure du courant, se rapportant aux conducteurs de phase se trouvant du côté de l'entrée, de deux conducteurs de phase, calculer des valeurs de mesure du courant pour le troisième conducteur de phase et mettre celles-ci conjointement avec les deux valeurs de mesure du courant se rapportant aux conducteurs de phase se trouvant du côté de l'entrée, à disposition des modules fonctionnels affectés.

8. Appareil de protection suivant la revendication 6, **caractérisé en ce que** l'unité de transformation par le calcul est propre, en tenant compte des valeurs de mesure de tension phase-terre, se rapportant aux conducteurs de phase se trouvant du côté de l'entrée, de deux conducteurs de phase, à calculer des valeurs de mesure de tension phase-phase pour tous les trois conducteurs de phase et à mettre ces dernières à disposition des modules fonctionnels affectés.

9. Appareil de protection suivant l'une des revendications précédentes, **caractérisé en ce qu'** au moins un type des modules de traitement préalable est propre à émettre, pour un conducteur de phase unique d'une ligne triphasée, des valeurs de mesure de tension se rapportant aux conducteurs de phase du côté de la sortie.

10. Appareil de protection suivant l'une des revendications précédentes, **caractérisé en ce qu'** au moins un type des modules de traitement préalable est propre pour un conducteur de phase unique d'une ligne triphasée à émettre des valeurs de mesure du courant se rapportant aux conducteurs de phase du côté de la sortie.

11. Appareil de protection suivant l'une des revendications précédentes, **caractérisé en ce qu'** il y a au moins quatre types de modules de traitement préalable, à savoir

   - un type propre à émettre, pour un conducteur de phase unique, d'une ligne triphasée, des valeurs de mesure de tension se rapportant aux conducteurs de phase du côté de la sortie,
   - un type propre à émettre, pour un conducteur de phase unique d'une ligne triphasée, des valeurs de mesure du courant, se rapportant aux conducteurs du phase du côté de la sortie,
   - un type propre, en tenant compte des valeurs de mesure du courant, se rapportant aux conducteurs de phase se trouvant du côté de l'entrée, d'au maximum deux conducteurs de phase de la ligne, à émettre des valeurs de mesure de courant pour tous les trois conducteurs de phase et
   - un type propre, en tenant compte des valeurs de mesure de tension, rapportées aux conducteurs de phase se trouvant du côté de l'entrée, d'au maximum deux conducteurs de phase de la ligne, à émettre des valeurs de mesure de tension phase-phase pour tous les trois conducteurs de phase.

12. Appareil de protection suivant l'une des revendications précédentes, **caractérisé en ce que** l'appareil de protection est conformé de manière à pouvoir affecter chaque borne utilisée de l'appareil de production, respectivement, exclusivement à un module unique de traitement préalable.

13. Appareil de protection suivant l'une des revendications précédentes, **caractérisé en ce que** les modules de traitement préalable sont conformés de manière à pouvoir associer plusieurs modules fonctionnels en parallèle à chaque module de traitement préalable.

14. Procédé pour faire fonctionner un appareil (10) de protection, dans lequel on relie entre eux une pluralité de bornes (A10) d'entrée d'appareil et une pluralité de modules (51, 220) fonctionnels par un réglage de la part de l'utilisateur de l'appareil de protection, de manière à ce que les modules fonctionnels puissent exécuter des fonctions de protection définies de la part de l'utilisateur et émettre des signaux de commande correspondants pour la fermeture ou l'ouverture d'un interrupteur associé de l'installation électrotechnique, **caractérisé en ce que**

   - on applique des modules (200, 210) de traitement préalable, au moins deux types différents de modules de traitement préalables étant mis à disposition, et dans lequel au moins un type de module de traitement préalable assiste deux types de branchement différents, par lesquels le module de traitement préalable respectif peut être branché en un point (ID01, ID02, ID03, IE04, UD01) de l'installation électrique;
   - il peut être associé au module de traitement préalable appliqué respectif, au moins une borne (A10) d'entrée d'appareil et au moins un module (51, 220) fonctionnel avec fixation de la fonction de la borne d'appareil, par le fait que l'appareil de protection dispose d'une matrice de tri d'entrée, dans laquelle il peut être défini, pour les modules de traitement préalable appliqués, les bornes d'entrée associées respectivement d'un appareil de protection et le type de branchement respectif et la au moins une borne d'entrée d'appareil est reliée au au moins un module fonctionnel par le module de traitement préalable;
   - pour fixer le mode de travail du module de traitement préalable, on affecte à celui-ci un type de branchement électrique;
   - il est mis, par l'appareil de protection, pour la fixation, de la part de l'utilisateur, de la liaison entre les modules de traitement préalable appliquées et les modules fonctionnels, une matrice de tri de sortie, dans laquelle il peut être défini, pour les modules de traitement préalable appliqués, respectivement, un module fonctionnel ou plusieurs modules fonctionnels;
   - la au moins une borne d'entrée d'appareil affectée au module de traitement préalable est raccordée à un point (ID01, ID02, ID03, IE01, UD01) de mesure de l'installation électrique suivant un type de branchement affecté au module de traitement préalable.

FIG 1

EP 2 186 178 B1

# FIG 2

30

IEO1

A10

A10

A10

100   100   100

43

100   100   100

A10

110

110

110

110

10

51

200

EP 2 186 178 B1

# FIG 3

EP 2 186 178 B1

## FIG 4

| Mess-stelle | Art des Vorverarbeitungs-moduls | Anschlussart | Klemmenbezeichnung des Schutzgeräts | | | | | | | | | | |
|---|---|---|---|---|---|---|---|---|---|---|---|---|---|
| | | | A10-1 | A10-2 | A10-3 | A10-4 | A10-5 | A10-6 | A10-7 | A10-8 | A10-9 | A10-10 | A10-11 |
| | | | | | | | | | | | | | |
| ID01 | 3-phasig Strom | Nr. 2 | IA | IB | IC | | | | | | | | |
| ID02 | 3-phasig Strom | Nr. 2 | | | | IA | IB | IC | | | | | |
| ID03 | 1-phasig Strom | ./. | | | | | | | IN | | | | |
| IE01 | 3-phasig Strom | Nr. 1 | | | | | | | | IA | IB | IC | IN |
| | | | | | | | | | | | | | |
| | | | | | | | | | | | | | |
| | | | | | | | | | | | | | |

## FIG 5

| Mess-stelle | Art des Vorverarbeitungs-moduls | Anschlussart | Klemmenbezeichnung des Schutzgeräts | | | | | | | | | | |
|---|---|---|---|---|---|---|---|---|---|---|---|---|---|
| | | | A10-12 | A10-13 | A10-13 | A10-14 | A10-15 | A10-16 | A10-17 | A10-18 | A10-19 | A10-20 | A10-21 |
| | | | | | | | | | | | | | |
| UD01 | 3-phasig Spannung | Nr. 1 | UA | UB | UC | UN | | | | | | | |
| UD02 | 3-phasig Spannung | Nr. 2 | | | | | UA | UB | UC | | | | |
| UD03 | 1-phasig Spannung | | | | | | | | | UN | | | |
| | | | | | | | | | | | | | |
| | | | | | | | | | | | | | |
| | | | | | | | | | | | | | |
| | | | | | | | | | | | | | |

EP 2 186 178 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6385022 B